# EUROPÄISCHE PATENTSCHRIFT

(11) **EP 0 920 615 B1**
(45) Veröffentlichungstag und Bekanntmachung des Hinweises auf die Patenterteilung: **06.06.2001**
(21) Anmeldenummer: 97938902.0
(22) Anmeldetag: 14.08.1997
(51) Int. Cl.: G01N 21/31, G01N 21/39

(54) **RESONANZ-ABSORPTIONSSPEKTROMETER UND VERFAHREN ZUR MESSUNG VON RESONANZ-ABSORPTIONSSPEKTREN VON IONEN**
RESONANCE ABSORPTION SPECTROMETER AND PROCESS FOR MEASURING RESONANCE ABSORPTION SPECTRA FOR IONS
SPECTROMETRE D'ABSORPTION DE RESONANCE ET PROCEDE POUR LA MESURE DES SPECTRES D'ABSORPTION DE RESONANCE DES IONS

(30) Priorität: 23.08.1996 DE 19635421
(43) Veröffentlichungstag der Anmeldung: 09.06.1999
(73) Patentinhaber: Deutsches Zentrum für Luft- und Raumfahrt e.V., 53175 Bonn (DE)
(72) Erfinder: HÜBERS, Heinz-Wilhelm, 15738 Zeuthen (DE)
(74) Vertreter: Effert, Bressel und Kollegen
(86) Internationale Anmeldenummer: EP9704442
(87) Internationale Veröffentlichungsnummer: WO9808075

(56) Entgegenhaltungen:
- WO-A-89/08832
- GB-A- 2 285 505
- I.N. POLUSHKIN ET AL.: "INTRACAVITY LASER SPECTROSCOPY INVESTIGATION OF THE MAGNETO-OPTICAL EFFECT IN NEON" TECHNICAL PHYSICS LETTERS., Bd. 20, Nr. 3, März 1994, NEW YORK US, Seiten 238-239, XP000448030
- J.-G. LAHAYE ET AL.: "INTRACAVITY CO2 LASER STARK SPECTROMETER WITH ALMOST-FREE PROPAGATION" APPLIED OPTICS., Bd. 24, Nr. 11, Juni 1985, NEW YORK US, Seiten 1657-1661, XP002046813
- G.A. LAGUNA: " SOURCE NOISE REDUCTION IN DIODE LASER SPECTROSCOPY USING THE FARADAY EFFECT" APPLIED OPTICS., Bd. 23, Nr. 13, 1.Juli 1984, NEW YORK US, Seiten 2155-2158, XP002046814
- H. KOIZUMI ET AL.: "NITRIC OXIDE DETERMINATION BY A ZEEMAN-TUNED FREQUENCY-MODUKATED ATOMIC LINE SOURCE" ANALYTICAL CHEMISTRY., Bd. 52, Nr. 3, März 1980, COLUMBUS US, Seiten 500-504, XP002046815
- J.B. MCMANUS ET AL.: "ATMOSPHERIC METHANE MEASUREMENT INSTRUMENT USING A ZEEMAN-SPLIT HE-NE LASER" APPLIED OPTICS., Bd. 28, Nr. 23, 1.Dezember 1989, NEW YORK US, Seiten 5016-5023, XP000081072

## Beschreibung

Die Erfindung betrifft ein Resonanz-Absorptionsspektrometer, umfassend einen Laser mit Resonator, eine im Resonator angeordnete Absorptionszelle und einer Auskopplungseinrichtung sowie ein Verfahren zur Resonanz-Absorptionsspektralanalyse für lonen.

lonen spielen eine wichtige Rolle in vielen chemischen Reaktionen, wie zum Beispiel Verbrennungsprozessen oder der Chemie der Atmosphäre. Im Ferninfrarot (FIR) - Spektralbereich (λ= 1000 µm bis 30 µm; f= 0,3THz bis 10 THz) ist die lasermagnetische Resonanz (LMR)-Spektroskopie die mit Abstand empfindlichste Nachweismethode. Dabei wird der Zeeman-Effekt in paramagnetischen Stoffen ausgenutzt. Ein FIR-Laser fester Frequenz wird als Strahlungsquelle verwendet, wobei zur Erzielung der Besetzungsinversion ein CO₂-Laser zum optischen Pumpen verwendet wird. Alternativ kann ein elektrisches Feld an den FIR-Laser angelegt werden, wobei dann die elektrische Gasentladung die Besetzungsinversion erzeugt. Das zu untersuchende Gas befindet sich abgeschlossen in der Absorptionszelle. Um die Absorptionszelle wird ein homogenes Magnetfeld aufgebaut, wobei die magnetische Induktion B bis zu zwei Tesla betragen kann. Durch Abstimmung der magnetischen Induktion B werden die Stahlungsübergänge aufgrund des Zeeman -Effekts in Koinzidenz mit der Strahlungsfrequenz des FIR-Lasers gebracht. Durch die auftretende Absorption der FIR-Laserstrahlung lassen sich dann Rückschlüsse auf Art und Konzentration der zu untersuchenden Stoffe ziehen (Wolfgang Demtröder, Laser Spectroscopy; Springer-Verlag 1981, Sec. 8.3).

Durch die Verwendung einer Absorptionszelle , die sich im Laser-Stehwellenresonator befindet (intracavity-Absorptionszelle) steigert sich die Empfindlichkeit des LMR-Spektrometers ca. um den Faktor 20 (Wolfgang Demtröder, a.a.O., Sec. 8.3.1). Kleine Änderungen der Absorption bewirken eine große Veränderung der Laserausgangsleistung die mit einem optischen Detektor nachgewiesen werden kann. Aus den gemessenen Magnetfeldpositionen, bei denen eine Absorption erfolgt, lassen sich dann Übergangsfrequenzen und Molekülkonstanten berechnen. Statt eines Magnetfeldes kann auch ein elektrisches Feld um die Absorptionszelle aufgebaut werden, wobei dann statt des Zeeman-Effekts der Stark-Effekt ausgenutzt wird.

Nachteilig bei den bekannten Spektroskopieverfahren für lonen ist die Maskierung durch Neutralteilchen. Neben den gewünschten Absorptionssignalen der Ionen treten nämlich auch eine Vielzahl von Signalen von neutralen Teilchen auf. Diese Teilchen sind häufig die Neutralteilchen der nachzuweisenden Ionen oder Fragmente von Reaktionsprodukten. Die Absorptionssignale von Neutralteilchen und Ionen sind aber nicht zu unterscheiden, so daß die Absorptionssignale der Neutralteilchen die der lonen maskieren. Da auch das Verhältnis zwischen Neutralteilchen und Ionen nicht bekannt ist, ist auch ein Rückschluß von der Gesamtabsorption auf die Absorption aufgrund der Ionen nicht möglich. Dadurch wird die Analyse von lonen- Spektren deutlich erschwert beziehungsweise unmöglich gemacht.

Eine Methode, mit der man Ionen- und oder Neutralteilchenspektren trennen kann, ist die Geschwindigkeits-Modulations-Spektroskopie. Bei diesem Verfahren wird durch eine von außen an die Absorptionszelle angelegte Wechselspannung der Frequenz f die Driftgeschwindigkeit V der Ionen periodisch moduliert. Aufgrund der Dopplerverschiebung wird auch die Absorptionsfrequenz ω= ωₒ - K · V moduliert, wobei ωₒ die Absorptionsfrequenz bei stationärem elektrischen Feld und k der Wellenvektor der Laserstrahlung ist. Die Driftgeschwindigkeit V und damit auch die Absorptionsfrequenz ω der neutralen Teilchen wird durch das elektrische Wechselfeld nicht verändert. Durch eine phasenempfindliche Detektion lassen sich somit die Absorptionslinien der Ionen von denen der neutralen Teilchen trennen. Letztere werden von der phasenempfindlichen Detektion nicht erfaßt und treten somit im Spektrum nicht mehr mit auf (David L. Andrews, Applied Laser Spectroscopy; VCH Verlagsgesellschaft mbH 1992, S.93-94).

Allerdings kann die Geschwindigkeits-Modulations-Spektroskopie nicht in der bekannten LMR-Spektroskopie verwandt werden, bei der die Absorptionszelle im Stehwellenresonator des Lasers angeordnet ist. Der Grund hierfür liegt darin, daß die Laserstrahlung im Stehwellenresonator keine ausgezeichnete Richtung gegenüber den Ionen hat.

Der Erfindung liegt daher das technische Problem zugrunde, ein Resonanz-Absorptionsspektrometer und ein Verfahren zur Resonanz-Absorptionsspektralanalyse für Ionen zu schaffen, bei dem bei großer Empfindlichkeit die Maskierung von Neutralteilchen vermieden wird.

Die Lösung des Problems ergibt sich aus den Merkmalen der Patenansprüche 1 und 13. Durch die Ausbildung des Laserresonators als Ringresonator kann die Geschwindigkeits-Modulations-Spektroskopie mit der LMR-Spektroskopie kombiniert werden, da durch den Ringresonator die Laserstrahlung immer nur in einer ausgezeichneten Richtung zu den Ionen steht. Dadurch wird erreicht, daß die jeweiligen Einzelvorteile der Verfahren sich synergistisch ergänzen. Die Anordnung der Absorptionszelle im Ringresonator (Intracavity-Absorptionszelle) ermöglicht die hohe Empfindlichkeit herkömmlicher LMR-Spektrometer, wobei durch die Anlegung eines elektrischen Wechselfeldes innerhalb der Absorptionszelle der Maskierungseffekt durch Neutralteilchen vermieden wird. Dadurch entsteht ein Resonanz-Absorptions-Spektrometer mit hoher Empfindlichkeit für Ionen. Das Absorptionsspektrometer kann dabei sowohl als lasermagnetisches Resonanz-Absorptionsspektrometer als auch als Stark-Resonanz-Absorptionsspektrometer ausgebildet sein. Weitere vorteilhafte Ausgestaltungen der Erfindung ergeben sich aus den Unteransprüchen.
Durch die Bildung des Ringresonators durch Spiegel im Resonatorkörper ist es möglich, mit geringen Verlusten einen Laser mit großem Wirkungsgrad zu realisieren, dessen Strahlung in ausgezeichneter Richtung zu den Ionen steht. Der Ringresonator kann dabei durch mindestens drei oder mehr Spiegel im Resonatorkörper gebildet werden. Durch die verschiebbare Ausbildung mindestens eines Spiegels kann einfach die Resonatorlänge variiert werden, wodurch die Umlaufrichtung des Laserstrahlung in Ringresonator verändert werden kann.

Dieser Effekt beruht darauf, daß durch die CO₂-Pumpstrahlung eine Geschwindigkeitsklasse der FIR-Lasermoleküle (z.B. Methanol) angeregt wird, die Strahlung in und entgegen der Molekülbewegungsrichtung emittieren. In Richtung der Mölekülbewegung ist die Laserstrahlung blauverschoben und entgegen der Bewegungsrichtung rotverschoben (Doppler-Effekt). Durch Variation der Resonatorlänge wird somit entweder die blau- oder rorverschobene Strahlung im Laser verstärkt, so daß eine Variation der Laserfrequenz möglich ist. Anstelle der Spiegel können auch Prismen verwendet werden. Durch Verwendung von Brewster-Fenstern zur Abtrennung der Absorptionszelle vom Ringresonator wird sichergestellt, daß keine FIR-Strahlung reflektiert wird. Zur Sicherung bei zu großen Druckunterschieden ist zwischen Absorptionszelle und Ringresonator ein Ventil angeordnet.

Die Erfindung wird nachfolgend anhand eines bevorzugten Ausführungsbeispieles näher erläutert. Die einzige Figur zeigt eine schematische Darstellung des Resonanz-Absorptionsspektrometers.

Das Resonanz-Absorptionsspektrometer 1 umfaßt einen CO₂-Laser 2, einen Ringresonator 3, eine Absorptionszelle 4 und einen Einkoppel-Spiegel 5. Der Ringresonator 3 besteht aus einem Resonatorkörper 6 und drei Spiegeln 7, wobei mindestens einer der Spiegel 7 verschiebbar angeordnet ist. Der Resonatorkörper 6 weist weiter eine Eingangsöffung 8 und eine Ausgangsöffung 9 auf. Im Ringresonator 3 ist die Absorptionszelle 4 angeordnet, die durch Brewster-Fenster 10 vom Ringresonator 3 vakuumdicht getrennt ist. Seitlich an der Absorptionszelle 4 ist ein Magnet 11 mit variabel einstellbarer magnetischer Induktion angeordnet, dessen elektromagnetische Induktion über einen großen Volumenbereich der Absorptionszelle 4 homogen ist. In der Absorptionszelle 4 sind zwei Elektroden 12 angeordnet, die von einem Hochspannungsgenerator 13 mit eines Wechselspannung beaufschlagt sind. An einer der Elektroden 12 ist ein Gaseinlaß 14 und an der anderen Elektrode 12 ist ein Gasauslaß 15 angebracht. Der Ringresonator 3 und die Absorptionszelle 4 sind über ein Ventil 16 miteinander verbunden. Im Bereich der Ausgangsöffnung 9 des Resonatorkörpers 6 ist im Inneren des Resonatorkörpers 6 ein verschiebbarer Auskoppel-Spiegel 17 angeordnet. Außerhalb des Resonatorkörpers 6 ist im Bereich der Ausgangsöffnung 9 ein Umlenkspiegel 18 angeordnet, in dessen Strahlungsgang ein optischer Detektor 19 angeordnet ist. Der Ausgang des optischen Detektors 19 ist mit dem Eingang eines rauscharmen Verstärkers 20 verbunden, dessen Ausgang mit dem Eingang eines Lock-In-Verstärkers 21 verbunden ist. Als Referenzsignal ist der Lock-In-Verstärker 21 mit der Wechselspannung des Hochspannungsgenerators 13 beaufschlagt. Das Ausgangssignal des Lock-In-Verstärkers 21 wird einer Auswerteeinrichtung 22 zugeführt.

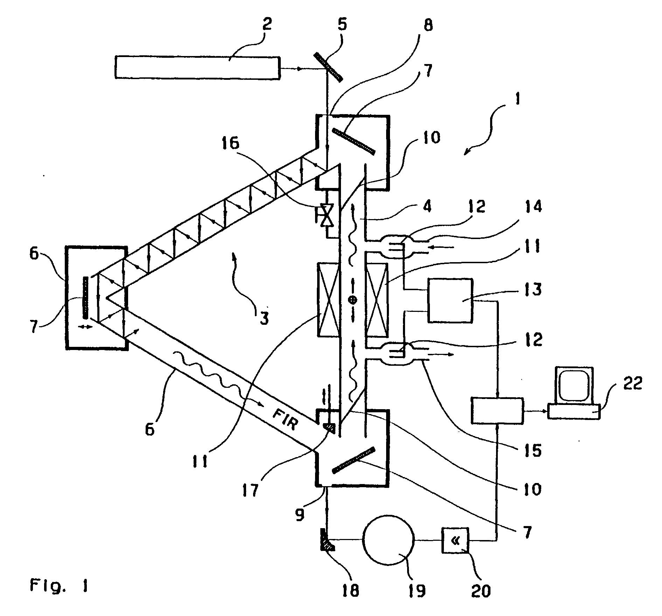

Die Pumpstrahlung des CO₂-Lasers 2 wird durch den Umlenkspiegel 5 durch die Eingangsöffung 8 in den Ringresonator 3 eingekoppelt. Dort werden die FIR-Lasermoleküle, wie z.B. Methanolmoleküle einer Geschwindigkeitsklasse angeregt. Diese emittieren aufgrund des Doppler-Effekts eine blauverschobene Strahlung in Richtung der Molekülbewegung und rotverschobene Strahlung entgegen der Richtung der Molekülbewegung. Mit Hilfe des der Absorptionszelle 4 gegenüber angeordneten Spiegels 7, der verschiebbar ausgebildet ist, kann die Resonatorlänge variiert werden. Je nach Resonatorlänge verstärkt sich die rot- oder die blauverschobene Strahlung. In der Fig. 1 ist eine FIR-Strahlung entgegen dem Uhrzeigersinn eingezeichnet. Diese Strahlung durchläuft bei evakuierter Absorptionszelle 4 den Ringresonator 3 verlustfrei, so daß unter Vernachlässigung von Absorptionsverlusten am Resonatorkörper 6 die Ausgangsleistung der FIR-Strahlung an der Ausgangsöffnung 9 konstant ist. Wird nun über den Gaseinlaß 14 ein zu untersuchendes Gas in die Absorptionszelle 4 eingeleitet, so werden die Ionen des Gases durch die an den Elektroden 12 anliegende Wechselspannung des Hochspannungsgenerators 13 in Schwingung versetzt. Durch Variation der magnetischen Induktion des Magneten 11 werden die Strahlungsübergänge des Gases in Koinzidenz mit der Frequenz der FIR-Strahlung gebracht. Die Variation der magnetischen Induktion kann bei Ausbildung des Magneten 11 als Solenoid (supra- oder normalleitend), wobei das Magnetfeld in Richtung der optischen Achse verläuft, oder als Elektromagnet mit Magnetfeld senkrecht zur optischen Achse durch Veränderung des elektrischen Stromes geschehen. Ist nun der Strahlungsübergang des Gases in Koinzidenz mit der FIR-Strahlung, so wird ein Teil der FIR-Strahlung von den Gasmolekülen absorbiert. Dieser Anteil durchläuft aber nun nicht mehr den Ringresonator 3, so daß die am optischen Detektor 19 gemessene Ausgangsleisstung abnimmt. Die Änderung der Ausgangsleistung setzt sich zusammen aus einem Anteil aufgrund der Absorption durch Neutralteilchen und einem aufgrund der Absorption durch die in Schwingung versetzten lonen. Mittels des Lock-In-Verstärkers 21 kann durch Vergleich mit der Frequenz des Hochspannungsgenerators 21 der Anteil aufgrund der lonenabsorption herausgefiltert werden.

Die Brewster-Fenster 10 dienen zum vakuumdichten Trennen des Ringresonators 3 und der Absorptionszelle 4. Das Brewster-Fenster stellt außerdem sicher, daß keine FIR-Strahlung beim Übergang von der Absorptionszelle 4 in den Ringresonator 3 reflektiert wird, so daß die FIR-Strahlung nur in der ausgezeichneten Richtung zu den Gasmolekülen strahlt. Falls der Druckunterschied zwischen Absorptionszelle 4 und dem Ringresonator 3 zu groß wird, z.B. bei Ausfall einer Vakuumpumpe, so kann mittels des Ventils 16 ein Druckausgleich hergestellt werden.

### Bezugszeichenliste

- 1): Resonanz-Absorptionsspektrometer
- 2): CO₂-Laser
- 3): Ringresonator
- 4): Absorptionszelle
- 5): Einkoppel-Spiegel
- 6): Resonator-Körper
- 7): Spiegel
- 8): Eingangsöffnung
- 9): Ausgangsöffnung
- 10): Brewster-Fenster
- 11): Magnet
- 12): Elektroden
- 13): Hochspannungsgenerator
- 14): Gaseinlaß
- 15): Gasauslaß
- 16): Ventil
- 17): Auskoppel-Spiegel
- 18): Umlenkspiegel
- 19): optischer Detektor
- 20): Verstärker
- 21): Lock-In-Verstärker
- 22): Auswerteeinrichtung

## Patentansprüche

1. Resonanz-Absorptionsspektrometer, umfassend einen Laser mit Ringresonator (3), eine Absorptionszelle (4), die im Resonator angeordnet ist und einer Auskopplungseinrichtung (9, 17), wobei in oder an der Absorptionszelle (4) zwei Elektroden (12) angeordnet sind, die mit einem Wechselspannungsgenerator (13) verbunden sind, mittels dessen in der Absorptionszelle (4) befindliche lonen in Schwingung versetzbar sind, und eine Einrichtung (11) vorgesehen ist, mittels derer ein annähernd homogenes, veränderbares magnetisches oder elektrisches Feld im Bereich der Absorptionszelle (4) erzeugbar ist, um die Absorptionseigenschaften der lonen durch den Zeemann- oder den Stark-Effekt zu verändern.

2. Resonanz-Absorptionsspektrometer nach Anspruch 1, dadurch gekennzeichnet, daß der Laser im FIR-Bereich arbeitet.

3. Resonanz-Absorptionsspektrometer nach einem der vorangegangenen Ansprüche, dadurch gekennzeichnet, daß der Ringresonator (3) durch Spiegel (7) in einem Resonatorkörper (6) gebildet wird.

4. Resonanz-Absorptionsspektrometer nach Anspruch 3, dadurch gekennzeichnet, daß der Ringresonator (3) durch drei Spiegel (7) in einem Resonatorkörper (6) gebildet wird.

5. Resonanz-Absorptionsspektrometer nach Anspruch 3, dadurch gekennzeichnet, daß der Ringresonator durch mindestens vier Spiegel (7) im Resonatorkörper (6) gebildet wird.

6. Resonanz-Absorptionsspektrometer nach Anspruch 3 bis 5, dadurch gekennzeichnet, daß mindestens einer der Spiegel (7) verschiebbar ausgebildet ist.

7. Resonanz-Absorptionsspektrometer nach Anspruch 1 oder 2, dadurch gekennzeichnet, daß der Ringresonator (3) durch Prismen im Resonatorkörper (6) gebildet wird.

8. Resonanz-Absorptionsspektrometer nach einem der vorangegangenen Ansprüche, dadurch gekennzeichnet, daß die Absorptionszelle (4) durch Brewster-Fenster (10) vom Ringresonator (3) getrennt ist.

9. Resonanz-Absorptionsspektrometer nach einem der vorangegangenen Ansprüche, dadurch gekennzeichnet, daß der Ringresonator (3) und die Absorptionszelle (4) über ein Ventil (16) miteinander verbunden sind.

10. Resonanz-Absorptionsspektrometer nach einem der vorangegangenen Ansprüche, dadurch gekennzeichnet, daß die Auskopplungseinrichtung (9, 17) durch einen beweglichen Auskoppel-Spiegel (17) und einer Auskopplungsöffnung (9) im Resonatorkörper (6) gebildet wird.

11. Verfahren zur Messung von Resonanz-Absorptionsspektren von lonen, mittels eines Lasers mit Ringresonator (3), einer Absorptionszelle (4), die im Ringresonator (3) angeordnet ist, mittels zweier Elektroden (12) in oder an der Absorptionszelle (4) und einer Auskopplungseinrichtung, umfassend folgende Verfahrensschritte:
a) Einstrahlen einer Laserpumpstrahlung zur Anregung der Lasermoleküle in dem Ringresonator (3),
b) Beaufschlagen der Elektroden mit einer Wechselspannung, um die lonen in der Absorptionszelle (4) in Schwingung zu versetzen,
c) Aufbauen eines annähernd homogenen elektrischen oder magnetischen Feldes im Bereich der Absorptionszelle (4), wobei die Feldstärke variierbar ist,
d) Erfassen eines Teiles der Laserstrahlung zur Bestimmung der Intensitätsänderung der Laserstrahlung aufgrund der Resonanz-Absorption des Gases innerhalb der Absorptionszelle,
e) Abtrennen der Intensitätsänderung aufgrund der Resonanz-Absorption der Neutralteilchen durch Abgleich mit der beaufschlagten Wechselspannung der Elektroden (12).

## Claims

1. Resonance absorption spectrometer, including a laser with an annular resonator (3), an absorption cell (4) which is disposed in the resonator, and an output arrangement (9, 17), wherein two electrodes (12) are disposed in or on the absorption cell (4) and are connected to an A.C. voltage generator (13), by means of which ions situated in the absorption cell (4) can be set into oscillation, and an arrangement (11) is provided, by means of which an approximately homogeneous, variable magnetic or electrical field can be generated in the region of the absorption cell (4) in order to vary the absorption properties of the ions by the Zeemann or Stark effect.

2. Resonance absorption spectrometer according to claim 1, characterised in that the laser operates in the FIR (far infrared) range.

3. Resonance absorption spectrometer according to one of the preceding claims, characterised in that the annular resonator (3) is formed by mirrors (7) in a resonator body (6).

4. Resonance absorption spectrometer according to claim 3, characterised in that the annular resonator (3) is formed by three mirrors (7) in a resonator body (6).

5. Resonance absorption spectrometer according to claim 3, characterised in that the annular resonator (3) is formed by at least four mirrors (7) in the resonator body (6).

6. Resonance absorption spectrometer according to claims 3 to 5, characterised in that at least one of the mirrors (7) is displaceable.

7. Resonance absorption spectrometer according to claim 1 or 2, characterised in that the annular resonator (3) is formed by prisms in the resonator body (6).

8. Resonance absorption spectrometer according to one of the preceding claims, characterised in that the absorption cell (4) is separated from the annular resonator (3) by Brewster windows (10).

9. Resonance absorption spectrometer according to one of the preceding claims, characterised in that the annular resonator (3) and the absorption cell (4) are interconnected via a valve (16).

10. Resonance absorption spectrometer according to one of the preceding claims, characterised in that the output arrangement (9, 17) is formed by a displaceable output mirror (17) and an output aperture (9) in the resonator body (6).

11. Method of measuring resonance absorption spectra of ions by means of a laser with an annular resonator (3), an absorption cell (4) which is disposed in the annular resonator (3), by means of two electrodes (12) in or on the absorption cell (4) and an output arrangement, including the following method steps:
a) radiating a laser pump radiation to excite the laser molecules in the annular resonator (3),
b) charging the electrodes with an A.C. voltage in order to set the ions in the absorption cell (4) into oscillation,
c) creating an approximately homogeneous electrical or magnetic field in the region of the absorption cell (4), the field intensity being variable,
d) monitoring a portion of the laser radiation to determine the change in intensity of the laser radiation based on the resonance absorption of the gas within the absorption cell, and
e) isolating the change in intensity based on the resonance absorption of the neutral particles by adjustment with the applied A.C. voltage of the electrodes (12).

## Revendications

1. Spectromètre d'absorption par résonance, comprenant un laser muni d'un résonateur en anneau (3), d'une cellule d'absorption (4), qui est montée dans le résonateur, et d'un dispositif de déclenchement (9, 17), moyennant quoi deux électrodes (12) sont montées dans ou contre la cellule d'absorption (4), lesquelles sont reliées à une génératrice de courant alternatif (13), au moyen de laquelle les ions situés dans la cellule d'absorption (4) peuvent être mis en oscillation, et il est prévu un dispositif (11) au moyen duquel il est possible de générer dans la zone de la cellule d'absorption (4) un champ magnétique ou électrique variable, pratiquement homogène, afin de modifier les propriétés d'absorption des ions par l'effet Zeemann ou l'effet Stark.

2. Spectromètre d'absorption par résonance selon la revendication 1, caractérisé en ce que le laser fonctionne dans le domaine FIR.

3. Spectromètre d'absorption par résonance selon l'une quelconque des revendications précédentes, caractérisé en ce que le résonateur en anneau (3) est formé par des miroirs (7) montés dans un corps de résonateur (6).

4. Spectromètre d'absorption par résonance selon la revendication 3, caractérisé en ce que le résonateur en anneau (3) est formé par trois miroirs (7) montés dans un corps de résonateur (6).

5. Spectromètre d'absorption par résonance selon la revendication 3 caractérisé en ce que le résonateur en anneau est formé par au moins quatre miroirs (7) montés dans le corps de résonateur (6).

6. Spectromètre d'absorption par résonance selon l'une quelconque des revendications 3 à 5, caractérisé en ce qu'au moins l'un des miroirs (7) est conçu de manière à pouvoir se déplacer.

7. Spectromètre d'absorption par résonance selon la revendication 1 ou 2, caractérisé en ce que le résonateur en anneau (3) est formé par des prismes montés dans le corps de résonateur (6).

8. Spectromètre d'absorption par résonance selon l'une quelconque des revendications précédentes, caractérisé en ce que la cellule d'absorption (4) est séparée du résonateur en anneau (3) par des fenêtres de Brewster (10).

9. Spectromètre d'absorption par résonance selon l'une quelconque des revendications précédentes, caractérisé en ce que le résonateur en anneau (3) et la cellule d'absorption (4) sont reliés l'un à l'autre par l'intermédiaire d'une vanne (16).

10. Spectromètre d'absorption par résonance selon l'une quelconque des revendications précédentes, caractérisé en ce que le dispositif de déclenchement (9, 17) est formé par un miroir de sortie (17) mobile et un orifice de sortie (9) dans le corps du résonateur (6).

11. Procédé destiné à mesurer les spectres d'absorption par résonance des ions, au moyen d'un laser muni d'un résonateur en anneau (3), d'une cellule d'absorption (4), qui est montée dans le résonateur en anneau (3), au moyen de deux électrodes (12), montées dans ou contre la cellule d'absorption (4), et d'un dispositif de déclenchement, comprenant les étapes suivantes :
a) émission d'un rayonnement par pompage laser destiné à exciter les molécules du laser dans le résonateur en anneau (3),
b) application d'une tension alternative sur les électrodes, afin que les ions dans la cellule d'absorption (4) soient mis en oscillation,
c) production d'un champ électrique ou magnétique pratiquement homogène dans la zone de la cellule d'absorption (4), l'intensité du champ étant variable,
d) enregistrement d'une partie du rayonnement laser afin de déterminer la variation d'intensité du rayonnement laser due à l'absorption par résonance du gaz à l'intérieur de la cellule d'absorption,
e) coupure de la variation d'intensité en raison de l'absorption par résonance des particules neutres par le réglage de la tension alternative appliquée sur les électrodes (12).
